(19) Europäisches Patentamt
European Patent Office
Office européen des brevets

(11) **EP 2 026 089 A2**

(12) **EUROPÄISCHE PATENTANMELDUNG**

(43) Veröffentlichungstag:
**18.02.2009 Patentblatt 2009/08**

(51) Int Cl.:
*G01S 5/02* (2006.01)          *G01S 5/14* (2006.01)

(21) Anmeldenummer: **08014244.1**

(22) Anmeldetag: **08.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **16.08.2007   DE 102007038696**

(71) Anmelder: **Björn Steiger Stiftung Service GmbH 70174 Stuttgart (DE)**

(72) Erfinder:
• **Jung, Peter**
  **47051 Duisburg (DE)**
• **Waadt, Andreas**
  **47057 Duisburg (DE)**
• **Bruck, Guido H.**
  **46562 Voerde (DE)**

(74) Vertreter: **Zinkler, Franz et al**
**Schoppe, Zimmermann, Stöckeler & Zinkler Patentanwälte**
**Postfach 246**
**82043 Pullach bei München (DE)**

(54)     **Vorrichtung und Verfahren zur Positionsbestimmung eines Mobilfunkendgerätes**

(57)     Eine Vorrichtung (100) zur Positionsbestimmung eines Mobilfunkendgerätes, mit einer Einrichtung (110) zum Liefern von Empfangspegelmessungen einer Mehrzahl von Basisstations-Sende-Empfängern, wobei ein Basisstations-Sende-Empfänger eine Basisstations-Sende-Empfängerposition aufweist und einen Zellbereich mit einer Zellbereichsposition mit Funksignalen versorgt, in dem ein Funkempfang durch ein Funksignal des Basisstations-Sende-Empfängers im Vergleich zu Funksignalen anderer Basisstations-Sende-Empfänger dominiert ist, wobei sich die Zellbereichsposition von der Basisstations-Sende-Empfängerposition unterscheidet und in dem Zellbereich liegt. Die Vorrichtung (100) umfasst ferner eine Einrichtung (120) zum Bestimmen der Position des Mobilfunkendgerätes basierend auf einer Kombination der Zellbereichspositionen der Basisstations-Sende-Empfänger.

FIG 1A

**Beschreibung**

Die vorliegende Erfindung bezieht sich auf die Lokalisierung von Mobilfunktelefonen bzw. Mobilfunkendgeräten in Mobilfunknetzwerken.

Die Lokalisierung von Mobilfunktelefonen, insbesondere wenn diese nicht über einen eingebauten GPS- Empfänger (GPS = Global Positioning System, Globales Positionsbestimmungssystem) verfügen bzw. keine GPS-Abdeckkung vorhanden ist, erfolgt in der konventionellen Technik durch Auswertung der Informationen, die durch die Verbindung der Mobilfunktelefone mit dem Mobilfunknetz und dessen Netzinfrastruktur gewonnen werden können. Im Bereich der konventionellen Technik kann die Lokalisierung durch Auswertung einer Position eines Sendemastes einer Funkzelle vorgenommen werden, in die ein Mobilfunktelefon eingebucht ist. Manche Funkzellen sind durch sektorisierte Antennen gekennzeichnet, wobei in diesen Fällen ein virtuelles Zentrum eines Sektors als Position des Mobilfunktelefons angegeben werden kann, in dem das Mobilfunktelefon eingebucht ist.

Diese Vorgehensweise erlaubt eine Positionsbestimmung eines Mobilfunktelefons, bzw. eines Mobilfunkendgerätes, nur mit einer eingeschränkten Genauigkeit. Dies ist insbesondere nachteilig in Situationen, in denen Notfälle auftreten und ein zeitnahes Eintreffen von Rettungskräften unabdinglich ist.

Im Bereich der konventionellen Technik existieren Verfahren, die eine höhere Genauigkeit zum Ziel haben und die neben der Position des Sendemastes der Funkzelle, in die das Mobilfunktelefon eingebucht ist, weitere Informationen auswerten können. Beispielsweise gehören zu diesen weiteren Informationen der Wert eines Timing Advance, ein zeitlicher Versatz zur Synchronisation in GSM-Netzen (GSM = Global System for Mobile Communication, Globales Mobilfunksystem) und in TDD-UMTS-Netzen (TDD = Time Division Duplex, Zeitbereichsduplex, UMTS = Universal Mobile Telecommunication System, universelles Mobilfunktelekommunikationssystem). Dieser Wert kann in den genannten Netzen zum Erreichen einer zeitlichen Synchronisation verwendet werden.

In anderen Konzepten ist eine genaue Messung einer Laufzeit der Funksignale zwischen einem Basisstations-Sende-Empfänger und einer Mobilstation vorgesehen, beispielsweise kann dies in FDD-UMTS-Netzen (FDD = Frequency Division Duplex, Frequenzbereichsduplex) vorkommen. Ferner können in GSM-Netzen und UMTS-Netzen die eindeutigen Bezeichnungen und die gemessenen Empfangsleistungen von bis zu sechs benachbarten Basisstations-Sende-Empfängern gemessen werden, über welche das Mobilfunktelefon bzw. Mobilfunkendgerät nicht eingebucht ist, deren Empfangsleistung aber standardmäßig gemessen und im Mobiltelefon gespeichert wird.

Ferner gibt es im Bereich der konventionellen Technik Verfahren, die Informationen über andere oder fremde Netze, die die Mobilstation empfangen kann und die daher in der Mobilstation vorliegen, berücksichtigen, wie beispielsweise über die Netze anderer Netzbetreiber, über UMTS-Netze oder über andere empfangbare Funksignale wie z.B. WLAN-Sendeempfänger (WLAN = Wireless Local Area Network, Lokales Schnurlosnetzwerk). Ferner kann eine zeitliche Aufzeichnung der oben genannten Werte und der Basisstations-Sende-Empfänger, in denen das Mobiltelefon eingebucht war, bei der Ermittlung einer Position hilfreich sein. Mit diesen Werten kann die "Spur der Bewegungen eines Mobiltelefons in der Netzwerkinfrastruktur" aufgezeichnet werden, und Aufschlüsse über einen momentanen Aufenthaltsort bzw. die momentane Position geben.

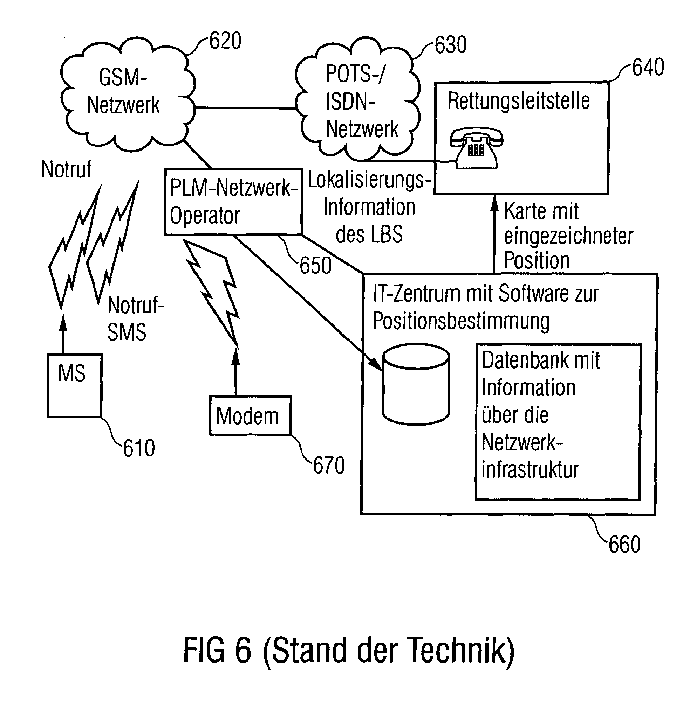

Fig. 6 illustriert ein System zur Alarmierung von Rettungsdiensten mit Nutzung einer Lokalisierung von Mobilfunktelefonen und Übermittlung von Informationen zur Positionsbestimmung durch ein externes Informationszentrum. Fig. 6 zeigt ein Mobiltelefon oder eine Mobilstation 610, ein Mobilfunknetz 620, welches in diesem Beispiel als GSM-Netzwerk ausgeführt ist, ein drahtgebundenes Netz 630, welches in dem Fig. 6 gezeigten Beispiel als POTS-/ISDN-Netzwerk (POTS = Plain Old Telephone Service bzw. Post Office Telephone Service, konventionelles Telefonnetz, ISDN = Integrated Services Digital Network, modernes drahtgebundenes digitales Telefonnetz), eine Rettungsleitstelle 640, an die der Notruf vermittelt werden soll, einen PLM-Netzwerkoperator 650 (PLM = Public Land Mobile, öffentliches Mobilfunknetz) und ein Informationszentrum 660, welches optional mit einem Modem 670 verbunden sein kann.

Fig. 6 zeigt ein System zur Lokalisierung einer Mobilstation 610 an einem Beispiel einer Alarmierung von Rettungsdiensten im Falle eines Notrufs. Ausgehend von einem Mobiltelefon 610 (MS = Mobilstation) wird ein Notruf ausgesandt, der über das drahtlose Mobilfunknetz 620 (PLM-Netzwerk) und das drahtgebundene Netz 630 (POTS-/ISDN-Netzwerk) an eine Rettungsleitstelle 640 weitervermittelt wird. Durch die Nutzung von beispielsweise "Location based Services" (LBS = Location based Services, Ortsbasierende Dienste) des Netzwerkbetreibers 650 (PLM-Netzwerk-Operator) wird eine Lokalisierungsinformation, z.B. die Lokalisierungsinformation des LBS, automatisch oder auf Anfrage an ein IT-Zentrum 660 weitergegeben, das durch geeignete Software der Rettungsleitstelle 640 eine berechnete Position des Mobilfunktelefons 610 beispielsweise mittels einer Karte anzeigt, damit die Rettungskräfte an die richtige Stelle geleitet werden können.

Das Informationszentrum (IT-Zentrum) kann dabei eine Datenbank mit Information über die Netzwerkinfrastruktur aufweisen. Die Weitergabe der Lokalisierungsinformationen kann dabei auch über eine andere Datenübertragungstechnik, wie z.B. per Fax oder E-Mail usw. erfolgen, wobei das IT-Zentrum 660 dann über ein entsprechendes Modem 670 verfügen kann.

Wie bereits oben erwähnt kann bei der Bestimmung der Position eines Mobilfunkendgerätes der Wert des Timing Advance, der im Folgenden auch TA (TA = Timing Advance, Zeitversatz) verwendet werden. TA gibt in GSM-Netzen die Laufzeit des Signals von einem Basisstations-Sende-Empfänger (auch engl. BTS = Base Transceiver Station, Basisstations-Sende-Empfänger) zur MS (MS = Mobilstation oder engl. mobile station) und zurück zur BTS in ganzen Bitperioden $T_b$ an, wobei auf ganze Bitperioden gerundet wird. Mit 156,25 Bits in einem Zeitschlitz von 15/26ms, ergibt sich eine Bitperiode zu

$$T_b = \frac{15\,\text{ms}}{26 \cdot 156,25} = \frac{30\,\text{ms}}{8125} \approx 3,69\,\mu\text{s}\,. \tag{1}$$

Angenommen, der effektive Abstand zwischen Basisstation und Mobilstation sei d. Mit der Bitperiode $T_b$ und der Lichtgeschwindigkeit $c = 3 \cdot 10^8\,\text{m}\big/\text{s}$ folgt dann für $TA$:

$$TA = \left[\frac{2 \cdot d}{c \cdot T_b}\right] \approx \left[\frac{d}{554\,\text{m}}\right]\,. \tag{2}$$

Die eckige Klammer [] bedeutet hier, dass auf ganze Zahlen gerundet wird. Umgekehrt lässt sich aus $TA$ auch der effektive Abstand

$$d \approx (TA + 0,5) \cdot 554\,\text{m} \tag{3}$$

berechnen. Die der Quantisierung des $TA$ entsprechende Ungenauigkeit beträgt etwa 277m. Für einen Timing Advance von $TA$=1 folgt beispielsweise, dass sich die Mobilstation in einem Abstand d von etwa 277m<$d$<831m um die Basisstation befindet. Durch Reflektionen und Beugung kann der Pfad der elektromagnetischen Welle größer werden, als es dem tatsächlichen Abstand zwischen MS und BTS entspricht, sodass der Abstand d in unserem Beispiel auch geringfügig kleiner als 277m sein kann. In TDD-UMTS-Netzen wird ein ähnlicher Wert ermittelt.

Die Laufzeit der Funksignale zwischen einem Basisstations-Transceiver/-Sende-Empfänger in FDD-UMTS-Netzen, in die Mobilstation eingebucht ist, kann beispielsweise durch das folgende Verfahren bestimmt werden:

- Der Basisstations-Transceiver sendet ein Funksignal 1 und merkt sich, wann das Funksignal 1 gesendet wurde.

- Die Mobilstation empfängt von diesem Funksignal 1 in der Regel mehrere durch Mehrwegausbreitung hervorgerufene Echos zu unterschiedlichen Zeitpunkten.

- Die Mobilstation sendet nach einer Zeit $t_{\text{TX-RX}}$ eine Empfangsbestätigung an den Basisstations-Transceiver. Diese Zeitspanne wird gemessen vom Zeitpunkt des ersten Echos des empfangenen Funksignals 1 bis zum Zeitpunkt des Sendens eines Referenzsignalwertes der Empfangsbestätigung. Die Empfangsbestätigung enthält eine Information über den Wert von $t_{\text{TX-RX}}$.

- Der Basisstations-Transceiver empfängt das Funksignal der Empfangsbestätigung durch in der Regel mehrere durch Mehrwegausbreitung hervorgerufene Echos zu unterschiedlichen Zeitpunkten. Er bestimmt die Zeitdifferenz zwischen dem Empfang des ersten Echos des Referenzsignalwertes und dem Senden des ursprünglichen Funksignals 1. Die doppelte Laufzeit der Funksignale kann durch Abzug von $t_{\text{TX-RX}}$ ermittelt werden.

- Diese Laufzeit der Funksignale wird der Mobilstation durch ein weiteres Funksignal mitgeteilt und liegt der Mobilstation dann vor.

Wie erwähnt, werden in der MS die empfangenen Signalstärken (RXLEV = Receive Level, Empfangspegel) von bis zu sieben Basisstations-Sende-Empfängern gemessen. Diese Signalstärken liegen in der MS als quantisierte Werte vor und werden auch als *RSSI* (RSSI = Receiver Signal Strength Indicator, Empfangspegelstärkenindikator) bezeichnet. Mit der logarithmischen Größe

$$p_{\mathrm{e}}/\mathrm{dBm}=10\cdot\lg\left(P_{\mathrm{e}}/\mathrm{mW}\right) \qquad (4)$$

der empfangenen Signalleistung $P_{\mathrm{e}}$, gilt für den Zusammenhang zwischen Signalleistung und *RSSI*:

$$RSSI = \begin{cases} 0 & ,\text{ wenn } p_{\mathrm{e}} \leq -110\mathrm{dBm} \\ \lceil 110 + p_{\mathrm{e}}/\mathrm{dBm} \rceil & ,\text{ wenn } -110\mathrm{dBm} < p_{\mathrm{e}} \leq -47\mathrm{dBm} \\ 63 & ,\text{ wenn } p_{\mathrm{e}} > -47\mathrm{dBm} \end{cases} . \qquad (5)$$

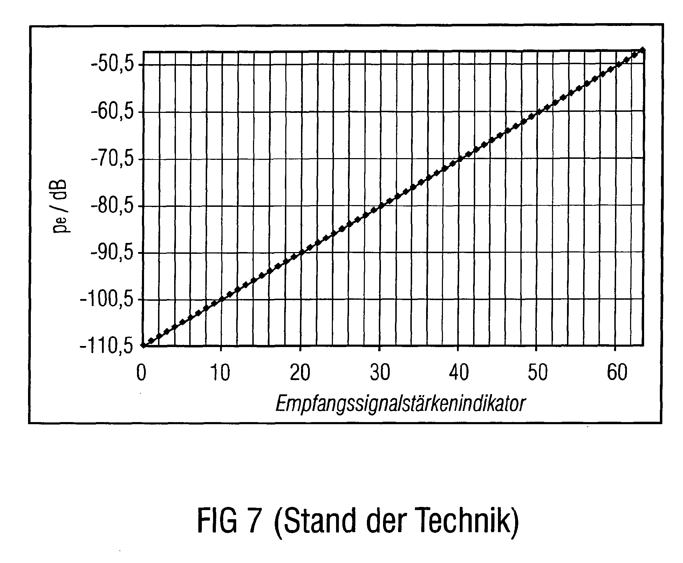

Die unten geöffnete Klammer $\lceil o \rceil$ bezeichnet, dass der darin befindliche Wert aufgerundet wird. Bei RSSI = 62 liegt die logarithmische Empfangsleistung $p_{\mathrm{e}}$ des Kontrollkanals BCCH (BCCH = Broadcast Control Channel, Kontrollkanal im GSM) der bedienenden Basisstation also im Bereich zwischen -47dBm < $p_{\mathrm{e}} \leq$ -46dBm Bei einer gleichverteilten Wahrscheinlichkeit ist in diesem Fall der Erwartungswert der logarithmischen Empfangsleistung zu $p_{\mathrm{e}}$ = -46,5dBm anzunehmen. Dieser Zusammenhang ist in Fig. 7 verbildlicht dargestellt. Die Fig. 7 zeigt ein Diagramm, welches Empfangsleistungen $p_{\mathrm{e}}$ in dB RSSI-Werten zuordnet.

Auf Basis der bekannten Werte kann die Position ($x_{\mathrm{MS}}$,$y_{\mathrm{MS}}$) der Mobilstation aus den Koordinaten der Basisstationen oder Basisstations-Sende-Empfängern ($x_{\mathrm{BTS}i}$, $y_{\mathrm{BTS}i}$) wie folgt geschätzt werden

$$x_{\mathrm{MS}} = \sum_{i=1}^{N_{\mathrm{BTS}}} g_{i,x} x_{\mathrm{BTS}i}$$
$$y_{\mathrm{MS}} = \sum_{i=1}^{N_{\mathrm{BTS}}} g_{i,y} y_{\mathrm{BTS}i} \qquad (6)$$

wobei die $g_{i,x}, g_{i,y}$ die Gewichte für die x- und *y*-Koordinaten des i-ten Basisstations-Transceivers sind. Die Gewichte werden z.B. in dem erwähnten IT-Zentrum aus den vom Mobiltelefon ermittelten und übertragenen Daten bestimmt.

Beispiele für die Bestimmung der Gewichte $g_{i,x}, g_{i,y}$:

1. Im Normalfall gilt für die Gewichte $g_{i,x} = g_{i,y}$ ·In Sonderfällen, z.B. in Regionen an den Grenzen des Gebietes eines Netzbetreibers, Küsten, etc. kann dies anders sein.

2. Die Gewichte $g_{i,x}, g_{i,y}$ sind alle gleich. Es wird der Schwerpunkt der durch die Basisstations-Transceiver aufgebauten Fläche bestimmt:

$$g_{i,x} = g_{i,y} = 1$$

3. Die Gewichte $g_{i,x}, g_{i,y}$ werden in der Reihenfolge der Empfangsleistungen abwärts mit konstanten Differenzen zwischen den einzelnen Gewichten gewählt. Die folgende Tabelle zeigt ein mögliches Beispiel:

| Nummer der nach Empfangsleistung abwärts sortierten Basisstations-Transceiver | |
|---|---|
| 1 (höchste Empfangsleistung) | $g_{i,x} = g_{i,y} = \dfrac{7}{28}$ |

(fortgesetzt)

| Nummer der nach Empfangsleistung abwärts sortierten Basisstations-Transceiver | |
|---|---|
| 2 | $g_{i,x} = g_{i,y} = \dfrac{6}{28}$ |
| 3 | $g_{i,x} = g_{i,y} = \dfrac{5}{28}$ |
| 4 | $g_{i,x} = g_{i,y} = \dfrac{4}{28}$ |
| 5 | $g_{i,x} = g_{i,y} = \dfrac{3}{28}$ |
| 6 | $g_{i,x} = g_{i,y} = \dfrac{2}{28}$ |
| 7 (niedrigste Empfangsleitung) | $g_{i,x} = g_{i,y} = \dfrac{1}{28}$ |

4. Die Gewichte werden aus den gemessenen Empfangsleistungen direkt bestimmt. Je nach zugrunde gelegtem Ausbreitungsmodell bedeutet eine Veränderung der Empfangsleistung um 1dB eine Veränderung des Abstands zwischen Basisstations-Transceiver und Mobilstation um den Faktor 1,06-1,13. Somit können die Gewichte der schwächer empfangbaren Basisstations-Transceiver um dasselbe Maß kleiner werden.

5. Aus einem über ein Ausbreitungsmodell gewonnenen Vorhersagen für die Empfangsleistungen in der Umgebung der Basisstations-Transceiver kann die Wahrscheinlichkeitsdichte bestimmt werden, mit der sich das Mobiltelefon an einer bestimmten Stelle befindet. Aus der Überlagerung der Wahrscheinlichkeitsdichten der einzelnen in der Mobilstation empfangbaren Basisstations-Transceiver kann die gesuchte Position der Mobilstation ermittelt werden.

Nachteil der bisherigen Lösung ist die Genauigkeit. Die Idee, die Positionsschätzung auf Basis der Ortskoordinaten umliegender Basisstationen durchzuführen ist ein guter Ansatz, berücksichtigt jedoch noch nicht die Richtcharakteristiken der an den Basisstationen eingesetzten Antennen. Die Auswertung der *RSSI* führt daher zu Fehleinschätzungen der Distanzen zwischen Mobiltelefon und Basisstation, die sich in einer niedrigen Genauigkeit niederschlagen.

Es ist die Aufgabe der vorliegenden Erfindung ein verbessertes Konzept zur Positionsbestimmung von Mobilfunkendgeräten zu schaffen.

Diese Aufgabe wird gelöst durch eine Vorrichtung zur Positionsbestimmung gemäß Anspruch 1 und ein Verfahren zur Positionsbestimmung gemäß Anspruch 24.

Die vorliegende Erfindung schafft eine Vorrichtung zur Positionsbestimmung eines Mobilfunkendgerätes, mit einer Einrichtung zum Liefern von Empfangspegelmessungen einer Mehrzahl von Basisstations-Sende-Empfängern, wobei ein Basisstations-Sende-Empfänger eine Basisstations-Sende-Empfängerposition aufweist und einen Zellbereich mit einer Zellbereichsposition mit Funksignalen versorgt, indem ein Funkempfang durch ein Funksignal des Basisstations-Sende-Empfängers im Vergleich zu Funksignalen anderer Basisstations-Sende-Empfänger dominiert ist, wobei sich die Zellbereichsposition von der Basisstations-Sende-Empfängerposition unterscheidet und in dem Zellbereich liegt. Die Vorrichtung umfasst ferner eine Einrichtung zum Bestimmen der Position des Mobilfunkendgerätes basierend auf einer Kombination der Zellbereichspositionen der Basisstations-Sende-Empfänger.

Der vorliegenden Erfindung liegt der Kerngedanke zugrunde, dass eine Position eines Mobilfunkendgerätes genauer bestimmt werden kann, wenn anstatt der Koordinaten der empfangbaren Basisstationen, eine Position in deren Zellbereich berücksichtigt wird. Beispielsweise könnte ein virtueller Schwerpunkt des geometrischen Abdeckungsbereiches einer Mobilfunkzelle verwendet werden. Durch Verwenden der Zellbereichspositionen, die sich von den Basisstations-Sende-Empfängerpositionen unterscheiden, ergeben sich für einen Basisstationsstandort, von dem aus mehrere Zellen mit Funksignalen versorgt werden auch mehrere Zellbereichspositionen, die sich untereinander unterscheiden. Gegenüber konventionellen Konzepten zur Positionsbestimmung ergibt sich so der Vorteil, dass für einen einzigen Basisstationsstandort nun anstatt einer Basisstations-Sende-Empfängerposition mehrere unterschiedliche Zellbereichspositionen berücksichtigt werden können, wodurch sich eine Position erheblich genauer bestimmen lässt. Da sich in den Zellbereichen Parameter wie Antennencharakteristik einer Basisstation, relative Ausrichtung gegenüber anderen Basisstationen, die Netzwerkinfrastruktur u.s.w. wiederspiegeln, werden durch Berücksichtigung der Zellbereichspositionen genauere Parameter des Mobilfunknetzes bei der Positionsbestimmung berücksichtigt, was sich in einer erhöhten Genauigkeit der Positionsbestimmung niederschlägt.

Ausführungsbeispiele der vorliegenden Erfindung werden im Folgenden anhand der beiliegenden Figuren näher beschrieben. Es zeigen:

Fig. 1a ein Ausführungsbeispiel einer Vorrichtung zur Positionsbestimmung;

Fig. 1b ein Ausführungsbeispiel einer Anordnung von Zellen und Zellbereichen in einem Mobilfunknetzwerk;

Fig. 1c ein weiteres Beispiel einer Anordnung von Zellen in einem Mobilfunknetzwerk;

Fig. 2 ein weiteres Ausführungsbeispiel einer Anordnung von Mobilfunkzellen;

Fig. 3a eine Karte zur Illustration eines Ausführungsbeispiels;

Fig. 3b eine Karte zur Illustration eines Standortes eines ersten Basisstations-Sende-Empfängers;

Fig. 3c eine Karte zur Illustration eines Standorts eines zweiten Basisstations-Sende-Empfängers;

Fig. 3d eine Karte zur Illustration eines Standortes eines dritten Basisstations-Sende-Empfängers;

Fig. 3e eine Karte zur Illustration einer Positionsbestimmung mit einem konventionellen Verfahren;

Fig. 3f eine Illustration zur Positionsbestimmung mit einem Ausführungsbeispiel;

Fig. 3g eine weitere Karte zur Illustration einer Positionsbestimmung mit einem Ausführungsbeispiel;

Fig. 4 eine Karte zur Illustration eines Weges zur Datenerfassung;

Fig. 5a eine Verteilungsfunktion eines Schätzfehlers eines konventionellen Verfahrens;

Fig. 5b eine Verteilungsfunktion eines Schätzfehlers in einem Ausführungsbeispiel.

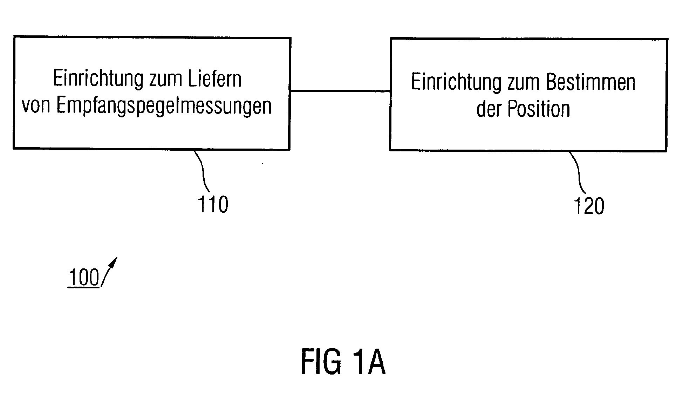

Die Fig. 1a zeigt eine Vorrichtung 100 zur Positionsbestimmung eines Mobilfunkendgerätes mit einer Einrichtung 110 zum Liefern von Empfangspegelmessungen einer Mehrzahl von Basisstations-Sende-Empfängern, wobei ein Basisstations-Sende-Empfänger eine Basisstations-Sende-Empfängerposition aufweist und einen Zellbereich mit einer Zellbereichsposition mit Funksignalen versorgt, indem ein Funkempfang durch ein Funksignal des Basisstations-Sende-Empfängers im Vergleich zu Funksignalen anderer Basisstations-Sende-Empfänger dominiert ist, wobei sich die Zellbereichsposition von der Basisstations-Sende-Empfängerposition unterscheidet und in dem Zellbereich liegt. Die Vorrichtung 100 weist ferner eine Einrichtung 120 zum Bestimmen der Position des Mobilfunkendgerätes basierend auf einer Kombination der Zellbereichspositionen der Basisstations-Sende-Empfänger auf.

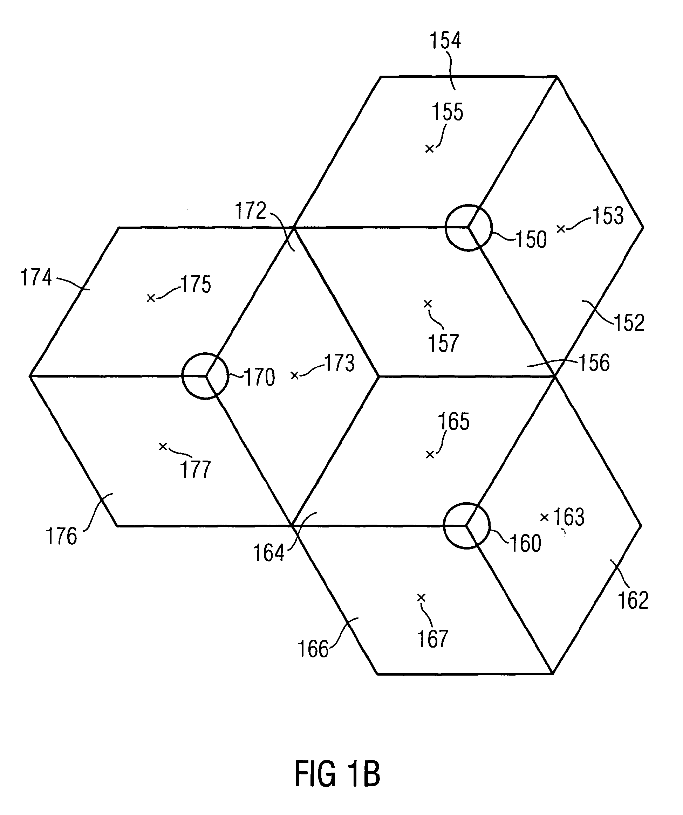

Zur näheren Erläuterung zeigt die Fig. 1b eine Anordnung dreier Basisstations-Sende-Empfänger 150, 160 und 170. Jeder der in der Fig. 1b gezeigten Basisstations-Sende-Empfänger versorgt drei Zellbereiche mit Funksignalen, d.h. dass ein Mobilfunkendgerät, das sich in einem dieser Bereiche aufhält, in dem entsprechenden Zellbereich eingebucht ist, da beispielsweise ein Steuersignal des Basisstations-Sende-Empfängers, welches für diese Zelle dediziert ist, in diesem Zellbereich am stärksten empfangbar bzw. dominant ist. Die Fig. 1b zeigt für den Basisstations-Sende-Empfänger 150 die drei Zellbereiche 152, 154 und 156. Aufgrund der Anordnung der Basisstations-Sende-Empfänger und der Ausrichtung ihrer Zellbereiche ergeben sich für den Basisstations-Sende-Empfänger 160 die Zellbereiche 162, 164 und 166, sowie für den Basisstations-Sende-Empfänger 170 die Zellbereiche 172, 174 und 176. Ferner ist in der Fig. 1b erkennbar, dass die drei Basisstations-Sende-Empfänger 150, 160 und 170 drei verschiedene Basisstations-Sende-Empfängerpositionen aufweisen, die jeweils in der Mitte der versorgten Zellbereiche liegen.

Erfindungsgemäß werden nun zur Positionsbestimmung eines Mobilfunkendgerätes nicht die Basisstations-Sende-Empfängerpositionen verwendet, sondern Zellbereichspositionen, die innerhalb der versorgten Zellbereiche liegen. In der Fig. 1b sind am Beispiel des Basisstations-Sende-Empfängers 150 die Zellbereichspositionen 153, 155 und 157 eingezeichnet. In analoger Weise sind für den Basisstations-Sende-Empfänger 160 die Zellbereichspositionen 163, 165 und 167 angegeben, sowie für den Basisstations-Sende-Empfänger 170 die Zellbereichspositionen 173, 175 und 177.

Betrachtet man einen einzelnen Zellbereich, wie beispielsweise den Zellbereich 152, der vom Basisstations-Sende-Empfänger 150 versorgt wird, so stellt man fest, dass eine Mobilstation, deren Position bestimmt werden soll und die in den Zellbereich 152 eingebucht ist, sich wahrscheinlich nicht an der Basisstations-Sende-Empfängerposition befindet. Eine solche Mobilstation kann sich irgendwo im Zellbereich 152 befinden. Bereits anhand der in der Fig. 1b gezeigten Geometrie ist leicht einzusehen, dass sich die Mobilstation wahrscheinlich näher an der Zellbereichsposition 153 befinden wird, als an der Basisstations-Sende-Empfängerposition. Aus diesem Grund können Ausführungsbeispiele der vorliegenden Erfindung aus den Zellbereichspositionen Schätzwerte für Mobilfunkendgeräte bestimmen, deren erwartete Schätzfehler deutlich unter den erwarteten Schätzfehlern herkömmlicher Systeme oder Verfahren liegen.

In Ausführungsbeispielen kann die Einrichtung 120 zum Bestimmen der Position ausgebildet sein, um eine Zellbereichsposition bei der Kombination zu berücksichtigen, die näher an einem Schwerpunkt eines Zellbereiches eines Basisstations-Sende-Empfängers als an der Basisstations-Sende-Empfängerposition des Basisstations-Sende-Empfängers angeordnet ist. Beispielsweise könnten in einem Mobilfunknetzwerk gemäß der Fig. 1b die Zellbereichspositionen in Form der geometrischen Schwerpunkte der Zellbereiche gewählt werden. Dieser Punkt könnte beispielsweise durch Minimierung eines zu erwartenden Schätzfehlers bestimmt werden.

In anderen Ausführungsbeispielen kann die Einrichtung 120 zum Bestimmen der Position auch ausgebildet sein, um Zellbereichspositionen von solchen Zellbereichen bei der Kombination zu berücksichtigen, die von einem Basisstations-Sende-Empfänger mit Funksignalen versorgt werden und in denen die Funksignale des Basisstations-Sende-Empfängers die Funksignale anderer Basisstations-Sende-Empfänger durch eine höhere Empfangsleistung, ein größeres Signal-zu-Rausch- oder Signal-zu-Rausch-und-Interferenz-Verhältnis dominiert. In Ausführungsbeispielen können sich die Zellbereiche demnach nach einer empfangbaren Signalqualität richten. Beispielsweise ist es denkbar, dass sich die Zellform aufgrund von empfangbaren Steuersignalen eines Basisstations-Sende-Empfängers ergeben, wobei die Steuersignale der verschiedenen Basisstations-Sende-Empfänger und Zellbereiche miteinander verglichen werden, und ein Ort jeweils dem Zellbereich zugeordnet wird, dessen Signal dominant ist.

Ferner kann die Einrichtung 120 zum Bestimmen der Position Gewichtungsinformation bei der Kombination der Zellbereichspositionen der Zellbereiche der Basisstations-Sende-Empfänger berücksichtigen, wobei die Gewichtungsinformation von den Empfangspegelmessungen abhängen kann. In anderen Ausführungsbeispielen kann bei der Positionsbestimmung Gewichtungsinformation berücksichtigt werden, die derart von den Empfangspegelmessungen abhängen, dass eine Zellbereichsposition eines Zellbereiches eines Basisstations-Sende-Empfängers, der einen hohen Wert bei der Empfangspegelmessung liefert, stärker die Position des Mobilfunkendgerätes beeinflusst, als eine Zellbereichsposition eines Zellbereichs eines Basisstations-Sende-Empfängers, der einen niedrigen Wert bei der Empfangspegelmessung liefert.

In Ausführungsbeispielen kann die Einrichtung 110 zum Liefern der Empfangspegelmessungen ausgebildet sein, um als Empfangspegelmessung einen Wert zu liefern, der auf eine Sendeleistung oder eine Antennencharakteristik eines Basisstations-Sende-Empfängers normiert ist. In diesem Fall kann die Richtcharakteristik der an Basisstations-Sende-Empfängern zum Einsatz kommenden Antennen berücksichtigt werden. Ferner können beispielsweise unterschiedliche Leistungen von Steuerkanälen bei der Positionsbestimmung berücksichtigt werden.

In Ausführungsbeispielen kann ferner die Einrichtung 120 zum Bestimmen der Position des Mobilfunkendgerätes ausgebildet sein, um eine Koordinate des Mobilfunkendgerätes gemäß der Gleichung (6) zu bestimmen, wobei anstatt der Basisstations-Sende-Empfängerpositionen Zellbereichspositionen verwendet werden. Die Einrichtung 120 zum Bestimmen der Position des Mobilfunkendgerätes kann dabei ausgebildet sein, um die Position des Mobilfunkendgerätes in zwei oder drei Raumkoordinaten zu bestimmen. Ferner können bei der Positionsbestimmung Gewichtungsfaktoren unterschiedlicher Raumrichtungen eines Basisstations-Sende-Empfängers gleich gewählt werden, d.h. $g_{i,x} = g_{i,y}$ bzw. $g_{i,x} = g_{i,y} = g_{i,z}$.

In anderen Ausführungsbeispielen kann die Einrichtung 120 zum Bestimmen der Position des Mobilfunkendgerätes ausgebildet sein, um alle Gewichtungsfaktoren gleich zu wählen. In anderen Ausführungsbeispielen können die Gewichtungsfaktoren der Zellbereichspositionen gemäß ihren Empfangspegelmessungen abwärts mit konstanten Differenzen zwischen den einzelnen Gewichtungen gewählt werden. In wieder anderen Ausführungsbeispielen können die Gewichtungsverhältnisse der einzelnen Zellbereichspositionen gemäß den Verhältnissen der Empfangspegelmessungen gewählt werden.

Die Einrichtung 120 zum Bestimmen der Position des Mobilfunkendgerätes kann in weiteren Ausführungsbeispielen ferner ausgebildet sein, um eine Wahrscheinlichkeitsdichte einer Position des Mobilfunkendgerätes gemäß einem Ausbreitungsmodell für einen Basisstations-Sende-Empfänger zu bestimmen und die Position des Mobilfunkendgerätes aus einer Überlagerung der Wahrscheinlichkeitsdichten für die Basisstations-Sende-Empfänger zu bestimmen. Ferner können Informationen über in der Vergangenheit liegende Empfangspegelmessungen zum Bestimmen der Position des Mobilfunkendgerätes berücksichtigt werden. Zusätzlich ist es denkbar, eine Bewegungsgeschwindigkeit eines Mobilfunkendgerätes bei der Bestimmung der Position zu berücksichtigen. Auch eine relative Positionsbestimmung, d.h. eine Position eines Mobilfunkendgerätes relativ zu einer bekannten Position kann in Ausführungsbeispielen durchgeführt werden.

Die Einrichtung 110 zum Liefern von Empfangspegelmessungen kann in Ausführungsbeispielen ferner ausgebildet sein, um relative Empfangspegelmessungen oder Empfangspegeländerungen zu messen und die Einrichtung 120 zum Bestimmen der Position des Mobilfunkendgerätes kann ferner ausgebildet sein, um die Position des Mobilfunkendgerätes basierend auf den relativen Empfangspegelmessungen oder Empfangspegeländerungen zu bestimmen. Die Einrichtung zum Liefern der Empfangspegelmessungen kann dabei Empfangspegelmessungen von GSM-Basisstations-Sende-Empfängern, UMTS-Basisstations-Sende-Empfängern, WLAN-Basisstations-Sende-Empfängern (WLAN = Wireless Local Area Network, schnurloses lokales Netzwerk), BlueTooth-Sendeempfängern, usw. zu liefern. Ferner ist es denkbar, dass Empfangspegelmessungen von Basisstations-Sende-Empfängern berücksichtigt werden, die in verschiedenen Frequenzbändern operieren, wobei die Einrichtung 110 zum Liefern dann entsprechend ausgebildet ist. Ferner kann die Einrichtung 110 zum Liefern der Empfangspegelmessungen ausgebildet sein, um zusätzlich zu den Empfangspegelmessungen Signallaufzeiten zu den Basisstations-Sende-Empfängern zu liefern und die Einrichtung 120 zum Bestimmen der Position des Mobilfunkendgerätes kann ausgebildet sein, um die Signallaufzeiten bei dem Bestimmen der Position des Mobilfunkendgerätes zu berücksichtigen.

Ausführungsbeispiele der vorliegenden Erfindung können Basisstations-Sende-Empfänger umfassen, die eine entsprechende Vorrichtung zur Positionsbestimmung aufweisen. Andere Ausführungsbeispiele umfassen ein Netzwerkelement eines Mobilfunknetzwerkes, in dem eine entsprechende Vorrichtung 100 vorhanden ist. Ferner können Ausführungsbeispiele der vorliegenden Erfindung auch in einem Mobilfunkendgerät implementiert sein.

Ausführungsbeispiele der vorliegenden Erfindung können demnach vorsehen, die Auswertung der Positionen virtueller Schwerpunkte von Funkzellen mit einer Auswertung von Informationen über viele umliegende Basisstations-Sende-Empfänger zu kombinieren. Dabei können Informationen über die Netzwerkinfrastruktur gesammelt und benutzt werden, um die in Gleichung (6) verwendeten Gewichte $g_{i,x}$ und $g_{i,y}$ zu ermitteln. Anders als in der Gleichung (6) werden als Stützpunkte für die Schätzung der Koordinaten $(x_{MS}, y_{MS})$ der Mobilstation jedoch nicht die Koordinaten $(x_{BTSi}, y_{BTSi})$ der Basisstationen $BTS_i$ verwendet. Stattdessen können Koordinaten $(X_{BTSi,k}, Y_{BTSi,k})$ eines virtuellen Schwerpunktes eines Zellsektors oder eines Zellbereiches $BTS_{i,k}$ verwendet werden, von dessen Sendeempfängerantenne das Mobiltelefon die entsprechenden Funksignale empfängt.

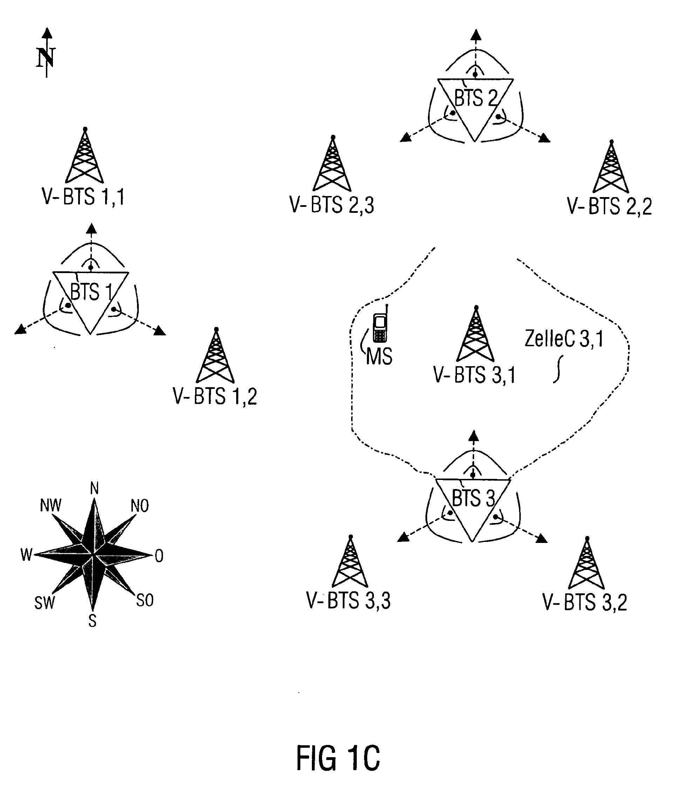

Fig. 1c zeigt ein weiteres Beispiel eines Mobilfunknetzwerkes. Die Fig. 1c zeigt drei Basisstations-Sende-Empfänger BTS1, BTS2 und BTS3. Fig. 1c zeigt die drei Basisstationen BTS1, BTS2 und BTS3 in der Umgebung eines Mobilfunktelefones MS. Die Basisstationen verwenden Antennen mit Richtcharakteristik. In dem in der Fig. 1c dargestellten Beispiel, strahlt die erste Antenne der Basisstation BTS3 in nördliche Richtung und deckt damit eine Zelle C3,1 ab, die sich in erster Linie im nördlichen Sektor von BTS3 befindet. Um die Ausrichtung der Fig. 1c klarzustellen, ist im unteren linken Bereich eine Kompassrose dargestellt und im oberen linken Bereich ein Pfeil, der exemplarisch nach Norden zeigen soll. Der Zellbereich der Zelle C3,1 ist in der Fig. 1c beispielhaft durch eine gestrichelte Linie gekennzeichnet, wobei der Zellbereich der Zelle C3,1 im Inneren der gestrichelten Linie liegt. In diesem Ausführungsbeispiel sei der virtuelle Schwerpunkt von C3,1 durch die Position V-BTS3,1, an der sich der in der Fig. 1c entsprechend bezeichnete Turm befindet, gekennzeichnet. Seine Koordinaten seien $(x_{BTS3,1}, Y_{BTS3,1})$.

Da sich BTS3 in der Randregion des Zellbereiches C3,1 befindet, ist der Erwartungswert eines Abstandes einer Mobilstation MS, die sich in der Zelle C3,1 befindet und über die nördlich abstrahlende Antenne von BTS3 eingebucht ist, zur tatsächlichen Position $(x_{BTS3}, y_{BTS3})$ von BTS3, größer als der Erwartungswert des Abstandes der Mobilstation MS zum virtuellen Schwerpunkt V-BTS3,1 in der Zelle C3,1. Analog zu diesem Beispiel der Zelle C3,1, bestrahlen die anderen Antennen der Basisstationen BTS1, BTS2 und BTS3 ebenfalls Zellen oder Zellbereiche, deren virtuelle Schwerpunkte durch entsprechende Koordinaten $(x_{BTSi,k}, y_{BTSi,k})$ beschrieben werden können und die in der Fig. 1c entsprechend eingezeichnet und bezeichnet sind.

Es gibt verschiedene Möglichkeiten einen virtuellen Zellschwerpunkt zu ermitteln. Zum Beispiel ist es möglich, das Gebiet in der Umgebung einer Basisstationsantenne abzuschreiten und in einem raumdiskreten Ersatzmodell durch Messungen die Punkte zu ermitteln, die innerhalb einer Zelle liegen. Durch solche Messungen können die Zellgrenzen ermittelt oder abgeschätzt werden. Nachdem die Grenzen einer Zellfläche ermittelt worden sind, kann der geometrische Schwerpunkt der Fläche bestimmt und als virtueller Zellschwerpunkt verwendet werden.

Weil das Messverfahren zur Ermittlung der Zellschwerpunkte sehr aufwendig ist, ist es auch denkbar, ein anderes Verfahren zu verwenden, durch das Schätzwerte von Zellschwerpunkten ermittelt werden. In diesem Fall werden dann Schätzwerte der Zellschwerpunkte als virtuelle Zellschwerpunkte verwendet. So kann zum Beispiel in einer Näherung davon ausgegangen werden, dass die Zelle einer Basisstationsantenne mit Richtcharakteristik die Form eines Kreissektors mit dem Radius R hat, und dass sich der Zellschwerpunkt auf einem Strahl von der Basisstationsantenne in Richtung der Hauptstrahlrichtung der Basisstationsantenne befindet. Der Abstand r des Zellschwerpunktes von der Basisstationsantenne ist dann

$$r = \frac{2}{3} R \; .$$

Wenn weiterhin davon ausgegangen wird, dass der Radius R des Zellsektors gleich dem halben Abstand zwischen benachbarten Basisstationen entspricht, so ergibt sich mit dem Abstand d benachbarter Basisstationen der Abstand r des Zellschwerpunktes von der Basisstationsantenne zu

$$r = \frac{2}{3} R = \frac{2}{3} \cdot \frac{d}{2} = \frac{d}{3} \; .$$

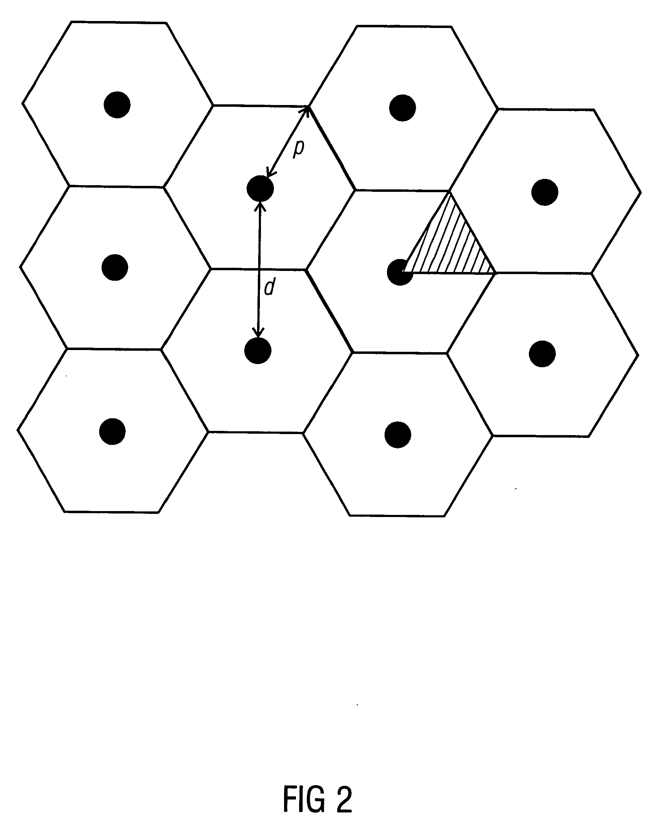

In vielen Ersatzmodellen wird im zellularen Mobilfunknetz von hexagonalen Zellen ausgegangen, wie sie in Fig. 2 dargestellt sind. Ein Radius ρ dieser Hexagonalzellen ergibt sich aus einem Abstand d zwischen Referenzbasisstation und umliegenden Basisstationen, die in der Fig. 2 als schwarze Kreisscheiben dargestellt sind, zu

$$\rho = \frac{d}{\sqrt{3}} \; .$$

Wenn ein Zellsektor nun zu einem Dreieck angenommen wird, wie es in Fig. 2 als Beispiel grau markiert ist, dann liegt der Zellschwerpunkt im Schnittpunkt der Seitenhalbierenden des Dreiecks und somit im Abstand

$$r = \frac{\rho}{\sqrt{3}} = \frac{d}{3}$$

von der Basisstationsantenne.

In den beiden gezeigten Beispielen, die verwendet werden können, um den virtuellen Zellschwerpunkt zu schätzen, ergibt sich der Abstand r des Zellschwerpunktes von der Basisstationsantenne zu

$$r = \frac{d}{3} \; .$$

Im Folgenden wird von dieser Näherung ausgegangen. Weil die Abstände zwischen einer Referenzbasisstation zu den umliegenden Basisstationen nicht für alle umliegenden Basisstationen gleich ist, wird der Abstand d benachbarter Basisstationen durch den Abstand der Referenzbasisstation zur nächsten Basisstation ersetzt.

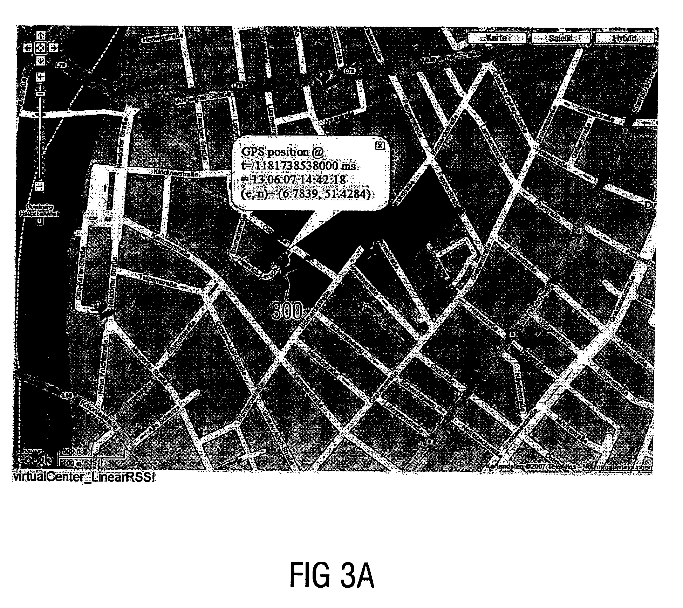

Um das Prinzip von Ausführungsbeispielen weiter zu veranschaulichen, wird im Folgenden anhand der Figuren 3a bis 3g eine Positionsbestimmung eines Mobilfunkendgerätes unter realistischen Bedingungen in einem Mobilfunknetzwerk betrachtet. Die Figuren 3a bis 3g zeigen jeweils Kartenausschnitte der Stadt Duisburg. Mittels einer Mobilstation wurden Location Area Codes (LAC = Location Area Code, Positionsbereichskennung) und Zell-ID (CI = Zell-Identification, Zellidentifikation) umliegender Basisstations-Sende-Empfänger erfasst sowie deren Leistungspegel in Form eines RSSI (RSSI = Received Signal Strengh Indicator, Empfangsleistungsstärkenindikator), der von den Basisstations-Sende-Empfänger ausgesendeten und von der Mobilstation empfangenen Signale aufgezeichnet. LAC und CI sind Nummern, die einer Basisstations-Sende-Empfängerantenne eines Netzbetreibers eindeutig zugeordnet sind. Sie dienen im vorliegenden Beispiel zur Identifikation verschiedener Zellbereiche, die beispielsweise von dem gleichen Basisstations-Sende-Empfänger, jedoch über unterschiedliche Antennen mit unterschiedlichen Richtcharakteristika mit Funksignalen versorgt werden.

Mit ihrer Hilfe können die Positionen der Basisstations-Sende-Empfängerantennen zugeordnet werden. Anhand der aufgezeichneten Messdaten können verschiedene Schätzverfahren zur Positionsbestimmung einer Mobilstation angewendet werden. Gleichzeitig mit der Messung der Empfangsleistungspegel (RSSI), kann die Position der Mobilstation mit Hilfe einer GPS-Maus (GPS = Global Positioning System, globales Positionsbestimmungssystem) dokumentiert werden. Gemäß dieser Dokumentation befand sich eine Mobilstation 300 am 13. Juni 2007 um 14:42:18 Uhr auf 6.7839° östlicher Länge und 51.4284° nördlicher Breite. Die Mess- und Schätzdaten werden im Folgenden auf GoogleMaps-Karten dargestellt, wobei die Fig. 3a die Position der Mobilstation 300 anzeigt und die GPS-Position mit dem entsprechenden Zeitstempel ebenfalls in der Karte der Fig. 3a angegeben ist.

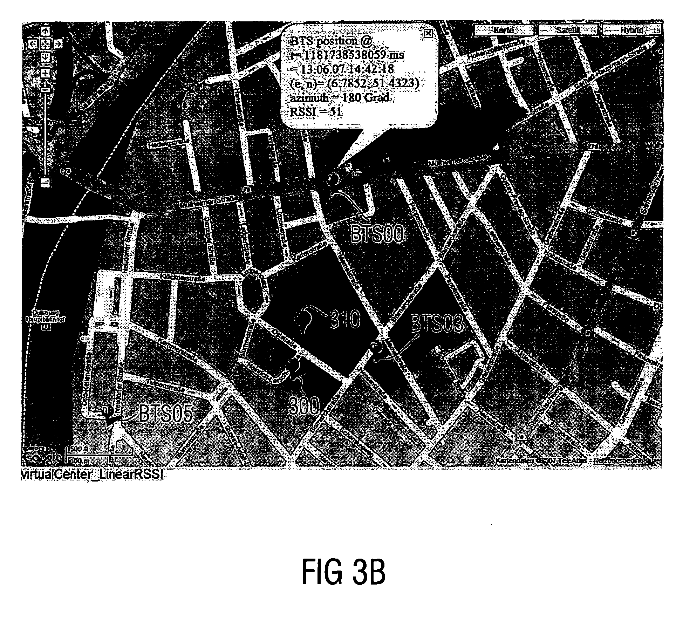

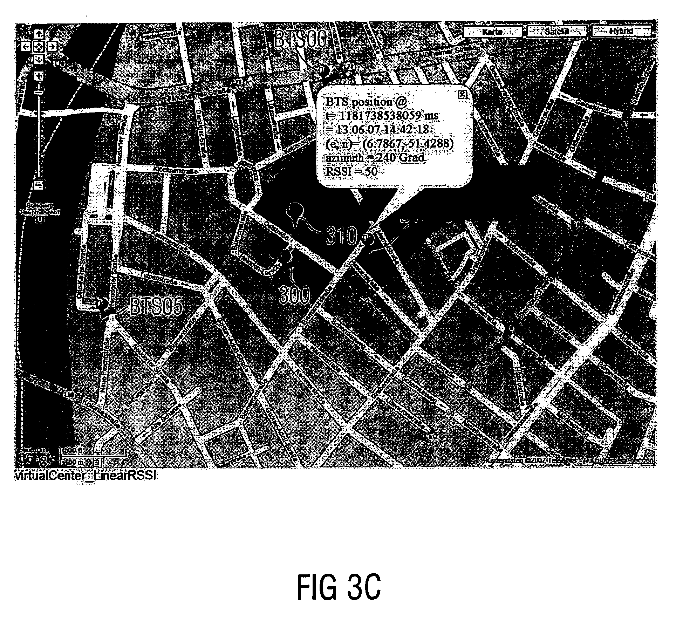

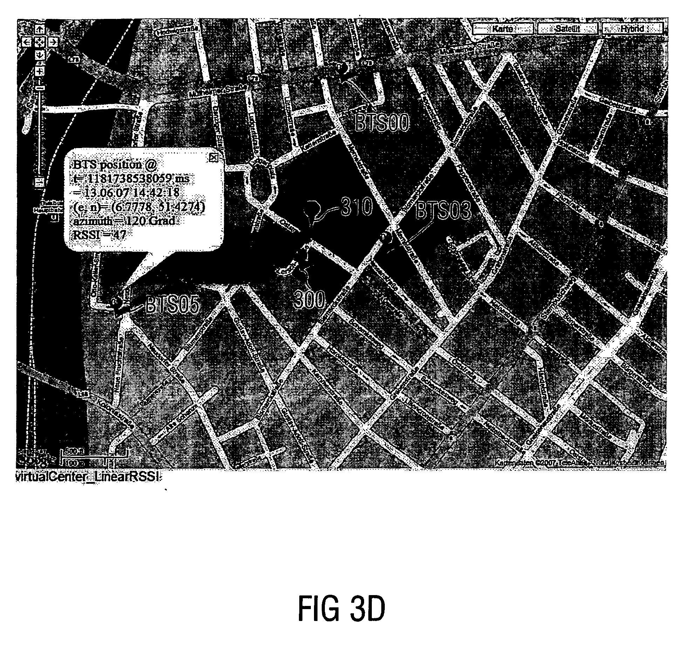

Zum Zeitpunkt einer ersten Messung können die Funksignale von drei umliegenden Basisstations-Sende-Empfängerantennen empfangen werden, und deren CI, LAC sowie RSSI ausgelesen werden. Die drei Basisstationsantennen werden im Folgenden als BTS00, BTS03 und BTS05 bezeichnet. Die Fign. 3b, 3c und 3d zeigen jeweils in einem Kartenausschnitt die Anordnungen der Basisstations-Sende-Empfänger BTS00, BTS03 und BTS05, sowie die GPS-Position der Mobilstation 300. Fig. 3b zeigt dabei zusätzlich die Positionsrichtung und Empfangsdaten der BTS00, die Fig. 3c die der BTS03 und die Fig. 3d die der BTS05. Die Empfangsleistungspegel RSSI, mit denen die Steuerkanäle der Basisstations-Sende-Empfängerantennen von der Mobilstation 300 empfangen wurden, sind in den entsprechenden Datensätzen in Form der RSSI-Werte angegeben, sowie die Positionen der Basisstations-Sende-Empfänger und die Hauptstrahlrichtungen ("azimuth") der Basisstations-Sende-Empfängerantennen. Der Winkel "azimuth" ist der Winkel der Hauptstrahlrichtung, der zwischen geographisch Nord und der Hauptstrahlrichtung einer Basisstations-Sende-Empfängerantenne liegt, gemessen im Uhrzeigersinn in Grad.

Ferner ist in den Figuren 3b, 3c und 3d eine geschätzte Position 310 der Mobilstation angegeben, welche sich ergibt, wenn das erfindungsgemäße Verfahren in einem Ausführungsbeispiel zur Positionsbestimmung verwendet wird. Die Mobilstation war bei BTS00 eingebucht und empfing das Signal von BTS00 mit höherer Leistung als das Signal des näher gelegenen Basisstations-Sende-Empfängers BTS03. Grund hierfür könnte beispielsweise gewesen sein, dass die Mobilstation 300 zu diesem Zeitpunkt in Richtung Osten durch eine Gebäude stark abgeschattet war. Solche Szenarien, in denen stark ungleichmäßige Abschattungen dazu führen können, dass eine Mobilstation nicht bei dem nächstgelegenen Basisstations-Sende-Empfänger eingebucht ist, können sich besonders in städtischen Gebieten häufig ergeben.

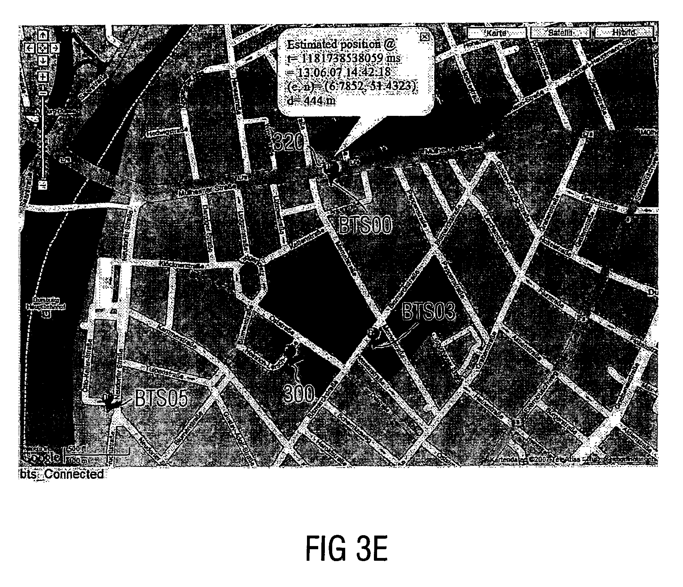

Die Figur 3e zeigt eine geschätzte Position 320 an, die sich ergibt, wenn die Position der Mobilstation mit derjenigen Position abgeschätzt wird, an der sich die Basisstations-Sende-Empfängerantenne befindet, bei der die Mobilstation eingebucht ist. In diesem Fall beträgt der Schätzfehler 444m.

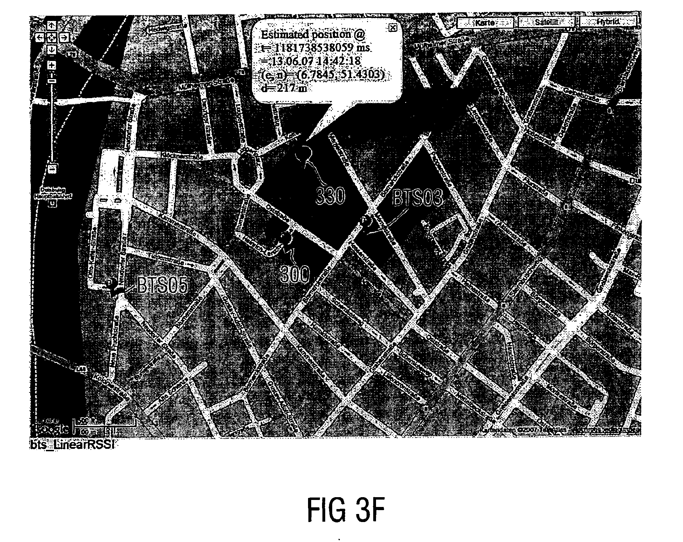

Die Fig. 3f zeigt eine geschätzte Position 300, die sich ergibt, wenn die Position der Mobilstation 300 durch eine Mittelung der Positionen umliegender Basisstationen ermittelt wird. Die Position von BTS05 wurde hierbei mit dem Gewicht 1/6, die Position von BTS03 mit dem Gewicht 2/6 und die Position von BTS05 mit 3/6 gewichtet. In diesem Fall beträgt der Schätzfehler 217m.

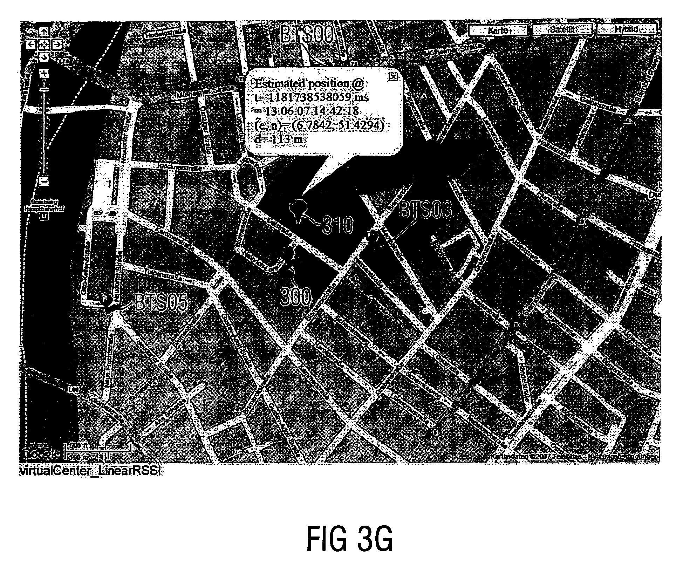

Die Fig. 3g zeigt noch einmal die geschätzte Position 310, die sich ergibt, wenn die Position der Mobilstation 300 durch eine Mittelung der Positionen virtueller Zellschwerpunkte ermittelt wird. Die Position des virtuellen Zellschwerpunktes von BTS05 wurde hierbei mit dem Gewicht 1/6, die Position des virtuellen Zellschwerpunktes von BTS03 mit Gewicht 2/6 und die Position des virtuellen Zellschwerpunktes von BTS05 mit 3/6 gewichtet. In diesem Fall beträgt der Schätzfehler nur noch 113m.

In dem durch die Figuren 3a bis 3g dokumentierten Beispiel schneidet das Ausführungsbeispiel, das in diesem Fall die virtuellen Schwerpunkte der Zellbereiche zur Positionsermittlung benutzt, am besten ab. Das in der Fig. 3f verwendete Verfahren berücksichtigt nicht, dass die Basisstationsantenne des BTS05 in südöstliche Richtung und BTS03 in südwestliche Richtung strahlt. Bei der in Fig. 3f geschätzten Position 330 könnte eher erwartet werden, dass Funksignale aus den nördlichen Sektoren der Basisstations-Sende-Empfänger in den Standorten von BTS03 und BTS05 empfangen werden. Diese Betrachtung zeigt deutlich die Stärke der Ausführungsbeispiele, welche beispielsweise eine Positionsmittelung auf Basis der virtuellen Schwerpunkte durchführen können.

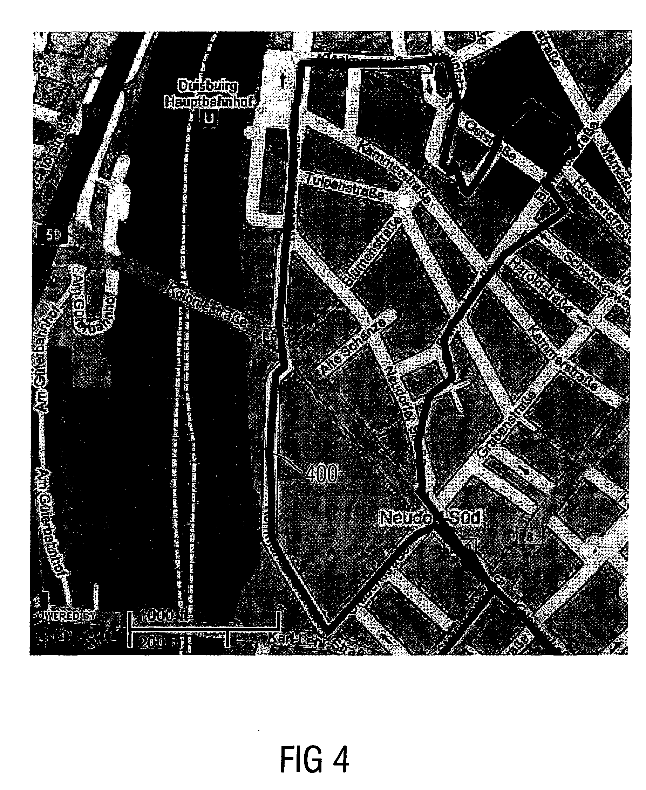

Um den Vorteil der Ausführungsbeispiele weiter zu verdeutlichen, wird im Folgenden gezeigt werden, dass das Beispiel aus den Figuren 3a bis g kein Einzelfall ist. Aus diesem Grund wurde im Stadtgebiet der Stadt Duisburg und Umgebung eine Messfahrt durchgeführt, bei der die oben erwähnten Antennendaten gesammelt und für Positionsschätzungen herangezogen wurden. Die Fig. 4 zeigt wiederum eine GoogleMaps-Karte, in der die Route 400 einer dieser Messdaten eingezeichnet ist. Die eingezeichneten Punkte der Route 400 ergeben sich aus GPS-Koordinaten, die während der Messfahrt aus einer GPS-Maus ausgelesen wurden. Es wurden verschiedene Schätzverfahren auf die gesammelten Messdaten angewendet. Für jedes Schätzverfahren wurden die Schätzfehler als absoluter Abstand zwischen geschätzter Position und tatsächlicher Position ermittelt. Als tatsächliche Positionen wurden die Positionen angenommen, die sich aus den GPS-Koordinaten ergeben haben.

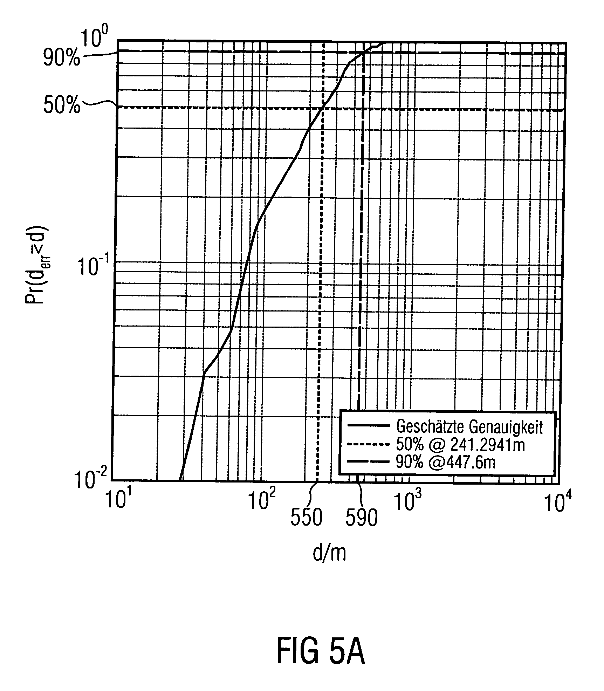

In Fig. 5a ist die relative Häufigkeit dafür, dass ein bestimmter Schätzfehler nicht überschritten wurde für das Verfahren einer linearen Gewichtung der Basisstations-Sende-Empfängerpositionen, wie es auch für die Fig. 3f eingesetzt wurde, aufgetragen. Die Linie 550 markiert dabei den Schätzfehler, der in 50% der Fälle nicht überschritten wurde, die Linie 590 markiert denjenigen Schätzfehler, der in 90% der Fälle nicht überschritten wurde. Es wurden diejenigen Daten ausgewertet, die bei der Messfahrt gemäß Fig. 4 gesammelt wurden. In 50% der Fälle war der Fehler kleiner oder gleich 241,2941m. In 90% der Fälle war der Messfehler kleiner oder gleich 447,6m.

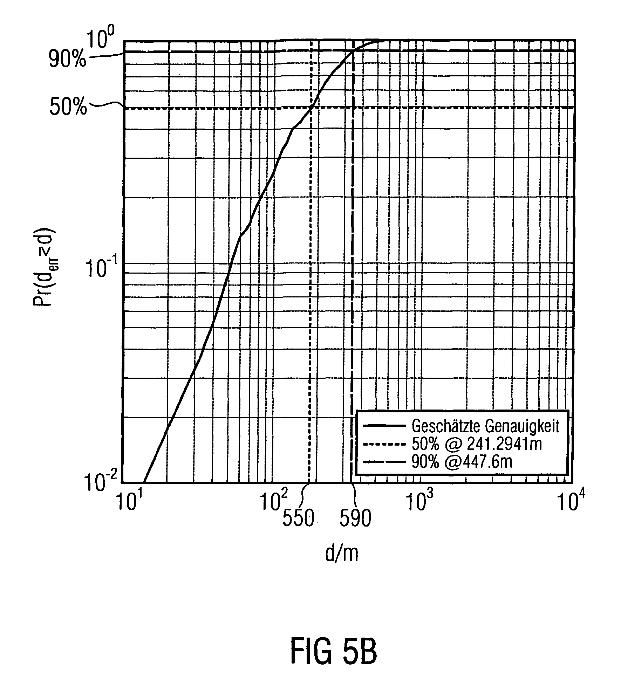

Die Fig. 5b zeigt die relative Häufigkeit dafür, dass ein gewisser Schätzfehler nicht überschritten wird für ein Ausführungsbeispiel, welches eine lineare Gewichtung der virtuellen Zellschwerpunkte zur Positionsschätzung heranzog. Analog zur Fig. 5a wurden die Daten derjenigen Messpunkte ausgewertet, die bei der in der Fig. 4 gezeigten Messfahrt gesammelt wurden. Die Linie 550 markiert wieder denjenigen Schätzfehler, der in 50% aller Fälle nicht überschritten wurde, die Linie 590 markiert wieder den Schätzwert, der in 90% der Fälle nicht überschritten wurde. In 50% der Fälle war der Fehler kleiner oder gleich 176,9375m, in 90% der Fehler kleiner als 344,8333m.

Die Figuren 5a und 5b dokumentieren deutlich den Vorteil oder den Gewinn an Genauigkeit, den Ausführungsbeispiele der vorliegenden Erfindung gegenüber konventionellen Positionsbestimmungsverfahren liefern. Prinzipiell sind neben dem hier betrachteten Verfahren auch andere Verfahren denkbar, beispielsweise solche, die die virtuellen Schwerpunkte der Zellen unterschiedlich gewichten. Beispielsweise könnten Positionen der Basisstationen anders gewichtet werden als dies in der Fig. 3f gezeigt wurde. Hält man dabei jedoch an den Basisstations-Sende-Empfängerpositionen fest, ist keine Erhöhung der Genauigkeit zu erwarten.

In Ausführungsbeispielen könnte auch zunächst der virtuelle Schwerpunkt einer Funkzelle, in welche das Mobiltelefon eingebucht ist, als geschätzte Position angenommen werden. Wegen der enormen Größe vieler Funkzellen wäre diese Position jedoch ungenau, andererseits bereits genauer als ein Verfahren, dass von den Basisstations-Sende-Empfängerpositionen ausgeht. In anderen Ausführungsbeispielen kann die Mobilstation auch Informationen über in der Vergangenheit liegende Messwerte liefern oder berücksichtigen, somit kann für jeden zurückliegenden Zeitpunkt, für den Messwerte vorliegen, die Position der Mobilstation bestimmt werden. Wegen der zu erwartenden niedrigen Bewegungsgeschwindigkeiten der Mobilstation werden die wahren Positionen zeitlich benachbarter Messwerte nicht weit auseinander liegen. Durch eine geeignete Mittelwertbildung der berechneten Positionen unter Berücksichtigung der Bestimmung einer Bewegungsgeschwindigkeit lässt sich die wahre Position genauer ermitteln, als wenn nur ein Satz von Messwerten zu einem Zeitpunkt ausgewertet wird.

Ausführungsbeispiele berücksichtigen Zellbereichspositionen, die sich von den Basisstations-Sende-Empfängerpositionen unterscheiden, wie beispielsweise die virtuellen Schwerpunkte der Zellbereiche. Die Messungen haben gezeigt, dass Ausführungsbeispiele der vorliegenden Erfindung einen erheblichen Gewinn in der Genauigkeit liefern können. Insbesondere in Notfällen äußern sich Gewinne in der Genauigkeit einer Positionsbestimmung oftmals in einem Zeitgewinn beim Auffinden eines in Not Geratenen. Ausführungsbeispiele tragen deshalb in Notfällen dazu bei, Hilfe durch Rettungskräfte schneller bereitzustellen.

Insbesondere wird darauf hingewiesen, dass abhängig von den Gegebenheiten das erfindungsgemäße Schema auch in Software implementiert werden kann. Die Implementation kann auf einem digitalen Speichermedium, insbesondere einer Diskette, einer CD oder einer DVD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogrammprodukt auf einem Computer abläuft.

Bezugszeichenliste

| | |
|---|---|
| 100 | Vorrichtung zur Positionsbestimmung |
| 110 | Einrichtung zum Liefern von Empfangspegelmessungen |
| 120 | Einrichtung zum Bestimmen der Position |
| 150 | Basisstations-Sende-Empfänger 1 |
| 152 | Zellbereich 1 des Basisstations-Sende-Empfängers 1 |
| 154 | Zellbereich 2 des Basisstations-Sende-Empfängers 1 |
| 156 | Zellbereich 3 des Basisstations-Sende-Empfängers 1 |
| 160 | Basisstations-Sende-Empfänger 2 |
| 162 | Zellbereich 1 des Basisstations-Sende-Empfängers 2 |
| 164 | Zellbereich 2 des Basisstations-Sende-Empfängers 2 |
| 166 | Zellbereich 3 des Basisstations-Sende-Empfängers 2 |

170    Basisstations-Sende-Empfänger 3
172    Zellbereich 1 des Basisstations-Sende-Empfängers 3
174    Zellbereich 2 des Basisstations-Sende-Empfängers 3
176    Zellbereich 3 des Basisstations-Sende-Empfängers 3
300    Mobilstation
310    Positionsschätzung mit einem Ausführungsbeispiel
320    Positionsschätzung durch Basisstations-Sende-Empfängerposition 3
330    Positionsschätzung durch Mittelung der Basisstations-Sende-Empfängerpositionen
400    Route der Messfahrt
550    Schätzfehler, der in 50 % der Fälle nicht überschritten wurde
590    Schätzfehler, der in 90 % der Fälle nicht überschritten wurde


**Patentansprüche**

1.  Vorrichtung (100) zur Positionsbestimmung eines Mobilfunkendgerätes mit folgenden Merkmalen:

    einer Einrichtung (110) zum Liefern von Enpfangspegelmessungen einer Mehrzahl von Basisstations-Sende-Empfängern, wobei ein Basisstations-Sende-Empfänger eine Basisstations-Sende-Empfänger-Position aufweist und einen Zellbereich mit einer Zellbereichsposition mit Funksignalen versorgt, in dem ein Funkempfang durch ein Funksignal des Basisstations-Sende-Empfängers im Vergleich zu Funksignalen anderer Basisstations-Sende-Empfänger dominiert ist, wobei sich die Zellbereichsposition von der Basisstations-Sende-Empfänger-Position unterscheidet und in dem Zellbereich liegt; und
    einer Einrichtung (120) zum Bestimmen der Position des Mobilfunkendgerätes basierend auf einer Kombination der Zellbereichspositionen der Basisstations-Sende-Empfänger.

2.  Vorrichtung (100) gemäß Anspruch 1, bei der die Einrichtung (120) zum Bestimmen der Position ausgebildet ist, um eine Zellbereichsposition bei der Kombination zu berücksichtigen, die näher an einem Schwerpunkt eines Zellbereiches eines Basisstations-Sende-Empfängers als an einer Basisstations-Sende-Empfänger-Position des Basisstations-Sende-Empfängers angeordnet ist.

3.  Vorrichtung (100) gemäß einem der Ansprüche 1 oder 2, bei der die Einrichtung (120) zum Bestimmen der Position ausgebildet ist, um Zellbereichspositionen von solchen Zellbereichen bei der Kombination zu berücksichtigen, die von einem Basisstations-Sende-Empfänger mit Funksignalen versorgt werden und in denen das Funksignal des Basisstations-Sende-Empfängers die Funksignale anderer Basisstations-Sende-Empfänger durch eine höhere Empfangsleistung, ein größeres Signal-zu-Rausch- oder Signal-zu-Rausch-und-Interferenz-Verhältnis dominiert.

4.  Vorrichtung (100) gemäß einem der Ansprüche 1 bis 3, bei der die Einrichtung (120) zum Bestimmen der Position ausgebildet ist, um die Kombination der Zellbereichspositionen der Zellbereiche der Basisstations-Sende-Empfänger gemäß Gewichtungsinformationen, die von den Empfangspegelmessungen abhängen, durchzuführen.

5.  Vorrichtung (100) gemäß Anspruch 4, bei der die Einrichtung (120) zum Bestimmen der Position ausgebildet ist, um die Gewichtungsinformationen derart zu berücksichtigen, dass sie von den Empfangspegelmessungen abhängen und dass eine Zellbereichsposition eines Zellbereichs eines Basisstations-Sende-Empfängers, der einen hohen Wert bei der Empfangspegelmessung liefert, stärker die Position des Mobilfunkendgerätes beeinflusst als eine Zellbereichsposition eines Zellbereichs eines Basisstations-Sende-Empfängers, der einen niedrigen Wert bei der Empfangspegelmessung liefert.

6.  Vorrichtung (100) gemäß einem der Ansprüche 1 bis 5, bei der die Einrichtung (110) zum Liefern der Empfangspegelmessungen ausgebildet ist, um als Empfangspegelmessung einen Wert zu liefern, der auf eine Sendeleistung oder eine Antennencharakteristik eines Basisstations-Sende-Empfängers normiert ist.

7.  Vorrichtung (100) gemäß einem der Ansprüche 1 bis 6, bei der die Einrichtung (120) zum Bestimmen der Position des Mobilfunkendgerätes ausgebildet ist, um eine Koordinate des Mobilfunkendgerätes gemäß

$$x_{MS} = \frac{1}{\displaystyle\sum_{i=1}^{N_{BTS}} g_{i,x}} \sum_{i=1}^{N_{BTS}} g_{i,x} x_{BTSi,k} \ ,$$

wobei $x_{MS}$ der zu bestimmenden Koordinate entspricht, $N_{BTS}$ gleich der Anzahl der betrachteten Basisstations-Sende-Empfängern ist, $g_{i,x}$ der zu einer Raumrichtung x und dem Basisstations-Sende-Empfänger i zugehörige Gewichtungsfaktor und $x_{BTSi,k}$ die zugehörige Koordinate der Zellbereichsposition des Zellbereiches des Basisstations-Sende-Empfängers BTSi, zu bestimmen.

8. Vorrichtung (100) gemäß Anspruch 7, bei der die Einrichtung (120) zum Bestimmen der Position des Mobilfunkendgerätes ausgebildet ist, um die Position des Mobilfunkendgerätes in zwei (x, y) oder drei Raumkoordinaten (x, y, z) zu bestimmen.

9. Vorrichtung (100) gemäß Anspruch 8, bei der die Einrichtung (120) zum Bestimmen der Position des Mobilfunkendgerätes ausgebildet ist, um Gewichtungsfaktoren unterschiedlicher Raumrichtungen eines Basisstations-Sende-Empfängers gleich zu wählen, $g_{i,x} = g_{i,y}$ bzw. $g_{i,x} = g_{i,y} = g_{i,z}$.

10. Vorrichtung (100) gemäß einem der Ansprüche 7 bis 9, bei der die Einrichtung (120) zum Bestimmen der Position des Mobilfunkendgerätes ausgebildet ist, um alle Gewichtungsfaktoren gleich zu wählen.

11. Vorrichtung (100) gemäß einem der Ansprüche 7 bis 10, bei der die Einrichtung (120) zum Bestimmen der Position des Mobilfunkendgerätes ausgebildet ist, um die Gewichtungsfaktoren der Zellbereichspositionen gemäß ihren Empfangspegelmessungen abwärts mit konstanten Differenzen zwischen den einzelnen Gewichtungsfaktoren zu wählen.

12. Vorrichtung (100) gemäß einem der Ansprüche 7 bis 11, bei der die Einrichtung (120) zum Bestimmen der Position des Mobilfunkendgerätes ausgebildet ist, um Gewichtungsverhältnisse der einzelnen Zellpositionen gemäß Verhältnissen der Empfangspegelmessungen zu wählen.

13. Vorrichtung (100) gemäß einem der Ansprüche 1 bis 12, bei der die Einrichtung (120) zum Bestimmen der Position des Mobilfunkendgerätes ausgebildet ist, um eine Wahrscheinlichkeitsdichte einer Position des Mobilfunkendgerätes gemäß einem Ausbreitungsmodell für einen Basisstations-Sende-Empfänger zu bestimmen, und die Position des Mobilfunkendgerätes aus einer Überlagerung der Wahrscheinlichkeitsdichten für die Basisstations-Sende-Empfänger zu bestimmen.

14. Vorrichtung (100) gemäß einem der Ansprüche 1 bis 13, bei der die Einrichtung (120) zum Bestimmen der Position des Mobilfunkendgerätes ausgebildet ist, um Informationen über in der Vergangenheit liegende Empfangspegelmessungen zum Bestimmen der Position des Mobilfunkendgerätes zu berücksichtigen.

15. Vorrichtung (100) gemäß einem der Ansprüche 1 bis 14, bei der die Einrichtung (120) zum Bestimmen der Position des Mobilfunkendgerätes ausgebildet ist, um eine Bewegungsgeschwindigkeit des Mobilfunkendgerätes bei der Bestimmung der Position zu berücksichtigen.

16. Vorrichtung (100) gemäß einem der Ansprüche 1 bis 15, bei der die Einrichtung (120) zum Bestimmen der Position des Mobilfunkendgerätes ausgebildet ist, um die Position des Mobilfunkendgerätes relativ zu einer bekannten Position zu bestimmen.

17. Vorrichtung (100) gemäß einem der Ansprüche 1 bis 16, bei der die Einrichtung (110) zum Liefern von Empfangspegelmessungen ausgebildet ist, um relative Empfangspegelmessungen oder Empfangspegeländerungen zu messen und ferner die Einrichtung (120) zum Bestimmen der Position des Mobilfunkendgerätes ausgebildet ist, um die Position des Mobilfunkendgerätes basierend auf den relativen Empfangspegelmessungen oder Empfangspegeländerungen zu bestimmen.

18. Vorrichtung (100) gemäß einem der Ansprüche 1 bis 17, bei der die Einrichtung (110) zum Liefern der Empfangspegelmessungen ausgebildet ist, um Empfangspegelmessungen von GSM-Basisstations-Sende-Empfängern, UMTS-Basisstations-Sende-Empfängern, WLAN-Basisstations-Sende-Empfängern oder Bluetooth-Sende-Empfängern zu liefern.

19. Vorrichtung (100) gemäß einem der Ansprüche 1 bis 18, bei der die Einrichtung (110) zum Liefern der Empfangspegelmessungen ausgebildet ist, um Empfangspegelmessungen von Basisstations-Sende-Empfängern, die in verschiedenen Frequenzbändern operieren, zu liefern.

20. Vorrichtung (100) gemäß einem der Ansprüche 1 bis 19, bei der die Einrichtung (110) zum Liefern der Empfangspegelmessungen ausgebildet ist, um zusätzlich zu den Empfangspegelmessungen Signallaufzeiten zu den Basisstations-Sende-Empfängern zu liefern und die Einrichtung (120) zum Bestimmen der Position des Mobilfunkendgerätes ausgebildet ist, um die Signallaufzeiten bei dem Bestimmen der Position des Mobilfunkendgerätes zu berücksichtigen.

21. Basisstations-Sende-Empfänger, der eine Vorrichtung (100) gemäß einem der Ansprüche 1 bis 20 aufweist.

22. Netzwerkelement eines Mobilfunknetzes, das eine Vorrichtung (100) gemäß einem der Ansprüche 1 bis 20 aufweist.

23. Mobilfunkendgerät, das eine Vorrichtung (100) gemäß einem der Ansprüche 1 bis 20 aufweist.

24. Verfahren zur Positionsbestimmung eines Mobilfunkendgerätes, mit folgenden Schritten:

Liefern von Empfangspegelmessungen einer Mehrzahl von Basisstations-Sende-Empfängern, wobei ein Basisstations-Sende-Empfänger eine Basisstations-Sende-Empfänger-Position aufweist und einen Zellbereich mit einer Zellbereichsposition mit Funksignalen versorgt, in dem ein Funkempfang durch ein Funksignal des Basisstations-Sende-Empfängers im Vergleich zu Funksignalen anderer Basisstations-Sende-Empfänger dominiert ist, wobei sich die Zellbereichsposition von der Basisstations-Sende-Empfänger-Position unterscheidet und in dem Zellbereich liegt; und
Bestimmen der Position des Mobilfunkendgerätes basierend auf einer Kombination der Zellbereichspositionen der Basisstations-Sende-Empfänger.

25. Computerprogramm mit einem Programmcode zur Durchführung des Verfahrens gemäß Anspruch 24, wenn der Programmcode auf einem Computer abläuft.

Einrichtung zum Liefern
von Empfangspegelmessungen

Einrichtung zum Bestimmen
der Position

110

120

100

# FIG 1A

FIG 1B

**N**

V-BTS 1,1

BTS 2

V-BTS 2,3

V-BTS 2,2

BTS 1

V-BTS 1,2

MS

V-BTS 3,1

ZelleC 3,1

N
NW    NO
W        O
SW    SO
S

BTS 3

V-BTS 3,3

V-BTS 3,2

# FIG 1C

FIG 2

FIG 3A

FIG 3B

FIG 3C

FIG 3D

FIG 3E

FIG 3F

EP 2 026 089 A2

FIG 3G

25

FIG 4

FIG 5A

FIG 5B

FIG 6 (Stand der Technik)

FIG 7 (Stand der Technik)